Europäisches Patentamt

European Patent Office

Office européen des brevets

(19)

(11) Publication number: **0 281 924**

**A2**

(12) **EUROPEAN PATENT APPLICATION**

(21) Application number: **88103197.5**

(22) Date of filing: **02.03.88**

(51) Int. Cl.⁴: **G02B 27/64**

(30) Priority: **12.03.87 JP 57576/87**

(43) Date of publication of application:
**14.09.88 Bulletin 88/37**

(84) Designated Contracting States:
**CH DE FR GB LI**

(71) Applicant: **ASAHI PRECISION CO., LTD.**
**5-2, Higashi-Oizumi 2-chome**
**Nerima-Ku Tokyo(JP)**

(72) Inventor: **Toga, Noriyuki**
**502-7, Kitanaka 3-Chome**
**Tokorozawa-Shi Saitama-Ken(JP)**
Inventor: **Kaneko, Kenji**
**1-17, Nakahara 3-Chome**
**Higashiyamato-Shi Tokyo(JP)**

(74) Representative: **Ebbinghaus, Dieter et al**
**v. FÜNER, EBBINGHAUS, FINCK**
**Patentanwälte European Patent Attorneys**
**Mariahilfplatz 2 & 3**
**D-8000 München 90(DE)**

(54) **Automatic compensator for compensating collimation error due to inclination in surveying instruments.**

(57) An automatic compensator for compensating a collimation error due to an inclination of an instrument body in surveying instruments comprises a plurality of transparent containers (2) fixed to the instrument body (1) horizontally with respect to a vertical collimation axis (M-M') of an optical system in the instrument and each having upper and lower surfaces parallel to each other. A transparent liquid (3) is charged in each container (2) so as to retain a hollow space at an upper portion thereof. The kind of the transparent liquid (3) is such that the difference between the sum of all refractive indices of the respective containers (2) charged with the transparent liquid (3) and the number of the containers (2) equals approximately 1, whereby the collimation error due to the inclination of the instrument body (1) is automatically compensated by utilizing the refraction of light passing through the transparent liquid (3).

F I G. 1

# AUTOMATIC COMPENSATOR FOR COMPENSATING COLLIMATION ERROR DUE TO INCLINATION IN SURVEYING INSTRUMENTS

## BACKGROUND OF THE INVENTION

Field of the Invention:

This invention relates to an automatic compensator for compensating a collimation error due to an inclination of an instrument body in surveying instruments, such as automatic vertical point setters, automatic horizontal point setters, automatic vertical point collimators and automatic horizontal point collimators and, more particularly, to a device for automatically compensating a collimation error due to an inclination of the instrument body in two directions, i.e., back-and forth direction and left-to-right direction by transparent containers charged with transparent liquid.

Description of the Prior Art:

A well-known surveying instrument such as automatic vertical point collimators is provided with a device for automatically compensating a collimation error due to an inclination of the instrument body, which includes a reflector or a lens mounted at the lower end of a pendulum suspended in the instrument body. When the instrument body is inclined in the back-and-forth direction and the left-to-right direction, the collimation axis of the instrument is automatically corrected to a vertical direction by the swing action of the pendulum. This prior art device is examplified by U.S. Patent No. 4,681,438 granted to the present inventor.

However, such prior art device has a problem in that because the pendulum is used as a principal component, it is always in some trouble or other with the pendulum, for instance, the pendulum tends to be out of balance, which would cause an error.

Further, since in order to make the moving pendulum still, it requires a damper which absorbs the vibration of the pendulum. Consequently, this prior art device is complex in construction and hence is expensive to manufacture.

## SUMMARY OF THE INVENTION

It is therefore an object of the present invention to provide an automatic compensator for compensating a collimation error due to an inclination of an instrument body in back-and-forth direction and/or left-to-right direction in surveying instruments by utilizing liquid which maintains a horizontal liquid level irrespective of the inclination of the instrument body and which reflects light passing therethrough.

Another object of the present invention is to provide an automatic compensator for compensating a collimation error due to an inclination of an instrument body in surveying instruments, without using a pendulum which would tend to be out of balance and in other trouble, but using as principal components transparent containers charged with liquid to perform the stable compensation.

A further object of the present invention is to provide an automatic compensator for compensating a collimation error due to an inclination of an instrument body in surveying instruments, without using a damper, but using as principal components transparent containers charged with liquid having appropriate viscosity to absorb the vibration of the instrument body.

A still further object of the present invention is to provide an automatic compensator for compensating a collimation error due to an inclination of an instrument body in surveying instruments, which device has a reduced number of components used for a compensation mechanism and hence inexpensive to manufacture.

A still further object of the present invention is to provide an automatic compensator for compensating a collimation error due to an inclination of an instrument body in surveying instrument such as automatic vertical point setters, automatic horizontal point setters automatic vertical point collimators and automatic horizontal point collimators, with reliability, thus guaranteering precise surveying.

Particularly, according to the present invention, there is provided automatic compensator for compensating a collimation error due to an inclination of an instrument body in surveying instruments, which comprises a plurality of transparent containers fixed to the instrument body horizontally with respect to a vertical collimation axis of an optical system provided in the instrument body and each having upper and lower surfaces parallel to each other. A transparent liquid is charged in each of the containers so as to retain a hollow space at an upper portion thereof, and the kind of the transparent liquid is such that the difference between the sum of all refractive indexes of the respective containers charged with the transparent liquid and the number of the containers equals approximately 1, whereby the collimation error due to the inclination of the instrument body is automatically compensated by utilizing the refraction of light passing through the transparent liquid.

## BRIEF DESCRIPTION OF THE DRAWINGS

These and other objects and advantages of the invention will become more fully apparent as the following description when read in conjunction with the drawings, wherein:

FIG. 1 is a vertical cross-sectional view of a device according to the present invention assembled in an automatic vertical point setter in which a light beam is emitted from a light source downwardly in the vertical direction;

FIG. 2 is a perspective view, partly broken away, of a container used in the present invention;

FIG. 3 is a view showing the manner in which a light beam is refracted by a wedge-shaped medium;

FIG. 4 is a side elevational view of an optical system according to the compensation principle of the present invention;

FIG. 5 is a vertical cross-sectional view of the device of the present invention assembled in an automatic horizontal point setter in which the light beam emitted from the light source downwardly in the vertical direction is reflected horizontally;

FIG. 6 is a perspective view showing the manner in which a light beam passes through the containers and a penta-prism;

FIG. 7 is an enlarged side elevational view of the penta-prism, showing the manner in which a light beam is reflected by a double-face reflector;

FIG. 8 is a side elevational view of a right-angled prism, showing the manner in which a light beam is reflected by a single-face reflector;

FIG. 9 is a side elevational view of an optical system according to another embodiment of the compensation principle of the present invention;

FIG. 10 is a vertical cross-sectional view of the device according to the present invention assembled in an automatic vertical point collimator in which the light beam incident from the lower vertical point is emitted perpendicularly;

FIG. 11 is a vertical cross-sectional view showing the device according to the present invention assembled in an automatic horizontal point collimator in which the light beam incident from a surveying point horizontally is reflected upwardly and then emitted in the horizontal direction;

FIG. 12 is a side elevational view of an optical system according to a further embodiment of the compensation principle of the present invention;

FIG. 13 is a perspective view showing the manner in which a light beam passes through the containers and a dach-prism;

FIG. 14 is a vertical cross-sectional view of the device of the present invention assembled in an automatic horizontal point collimator in which the light beam incident from a surveying point horizontally in reflected downwardly and then emitted in the horizontal direction;

FIG. 15 is a side elevational view of an optical system according to a still further embodiment of the compensation principle of the present invention;

FIG. 16 is a perspective view of an inverter reflector;

FIG. 17 is a perspective view of a modified inverter reflector;

FIG. 18 is a vertical cross-sectional view of the device of the present invention assembled in an automatic vertical point setter in which the light beam emitted from the light source upwardly along a vertical collimation axis is emitted vertically; and

FIG. 19 is a vertical cross-sectional view of the device of the present invention assembled in an automatic vertical point collimator in which the light beam incident from the surveying point in the vertical direction is emitted horizontally.

## DESCRIPTION OF THE PREFERRED EMBODIMENTS

A surveying instrument, such as an automatic vertical point setter, an automatic horizontal point setter, an automatic vertical point collimators and an automatic horizontal point collimator, has an instrument body 1 in which a plurality of transparent containers 2, 2' are fixedly mounted horizontally to the vertical collimation axis M-M' and are arranged one over another.

Each of the containers 2, 2' is charged with liquid 3, 3' so as to retain a hollow space at an upper portion of the container and is sealed tightly.

The liquid 3, 3' has an adequate transparency so that light may pass therethrough, and has an appropriate viscosity such that the liquid absorbs vibrations to maintain a stable and flat liquid level. Preferably, the liquid has an appropriate refractive index and hardly changes in quality even when in use for many years, and the most preferred liquid is silicone oil (refractive index: 1.5).

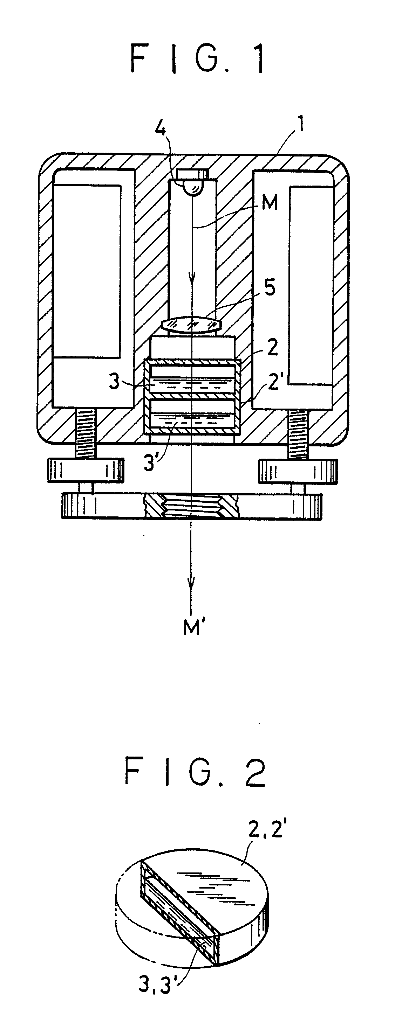

In one embodiment of FIG. 1 the instrument is an automatic vertical point in setter in which a laser light beam is emitted vertically downwardly from a light source 4 such as a laser diode mounted at an upper portion of the instrument body 1, and the point on which the light beam is inadiated is determined as a vertical or perpendicular point. The containers 2, 2' charged with the liquid 3, 3' are arranged horizontally in the light path extending along the vertical collimation axis M-M' of a projector lens 5.

As shown in FIG. 2, each container 2, 2' is made of transparent glass and has upper and lower surfaces parallel to each other. The upper and lower surfaces of each container 2, 2' are normally horizontal, so that the liquid 3, 3' in the container 2, 2' remains a uniform depth through the entire area as the instrument body 1 assumes its vertical position. When the instrument body 1 is inclined by an angle $\alpha$, the liquid level remains horizontal in each container 2, 2' slanting at an angle $\alpha$. As a result, a wedge-shaped depth gradient $\alpha$ is created on the inclined bottom surface of each container 2, 2'.

In the present invention, the principle that the light beam is refracted as it passes through the liquid 3, 3' of the depth gradient $\alpha$ is applied to compensate a collimation error due to the inclination $\alpha$ of the instrument body 1.

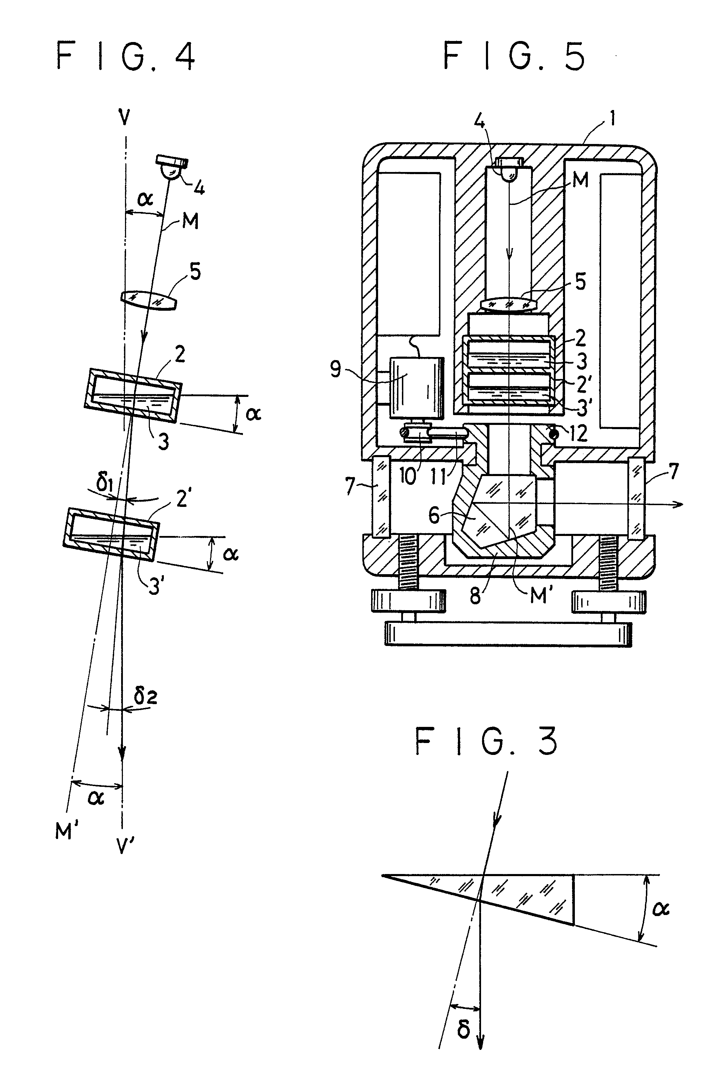

In other words, as shown in FIG. 3, when the light beam passes through the wedge-shaped medium different in refractive index from the air, a deviation angle $\delta$ is created. The deviation angle $\delta$ may be approximately obtained by the following equation:

$$\delta = (n-1)\alpha$$

where n is a refractive index of the wedge-shaped medium and $\alpha$ is a gradient of the wedge-shaped medium.

FIG. 4 illustrates this principle of compensation, in which as the vertical collimation axis M-M' is inclined by an angle $\alpha$ to the imaginary vertical axis V-V' due to the inclination of the instrument body 1, the liquid 3, 3' in each container 2, 2' assumes a wedge shape of gradient $\alpha$, which compensates a collimation error.

In this condition, the light beam emitted from the light source 4 in incident on the container 2 as a bundle of parallel light via the projector lens 5, and is emitted from the container 2 at a deviation angle $\delta_1$ with respect to the vertical collimation axis M-M' as it is refracted when passing through the wedge-shaped liquid 3.

The deviation angle $\delta_1$ is obtained by the following equation:

$$\delta_1 = (n_1 - 1)\alpha \qquad .......... (1)$$

where $n_1$ is a refractive index of the liquid 3.

Then the light beam emitted from the container 2 is incident on container 2', and is emitted from the container 2' at a deviation angle $\delta_1$ with respect to the incident light as the latter is refracted when passing through the wedge-shaped liquid 3'.

The deviation angle $\delta_2$ is obtained by the following equation:

$$\delta_2 = (n_2 - 1)\alpha \qquad .......... (2)$$

where $n_2$ is a refractive index of the liquid 3'.

Thus the light beam having passed through the containers 2, 2' is emitted therefrom at a deviation angle $\delta$ with respect to the vertical collimation axis M-M'.

The deviation angle $\delta$ is obtained by the following equation:

$$\delta = \delta_1 + \delta_2 \qquad .......... (3)$$

If the equations (1) and (2) are substituted for the equation (3), the deviation angle $\delta$ is expressed by the following:

$$\delta = (n_1 + n_2 - 2)\alpha \qquad .......... (4)$$

In this case, since the deviation angle $\delta$ is created in the direction approaching the imaginary vertical axis V-V', a collimation error due to the inclination of the instrument body 1 may be compensated if the deviation angle $\delta$ satisfies the following equation:

$$\delta = \alpha \qquad ............ . (5)$$

If the equation (4) is substituted for the equation (5), the condition in which the error may be compensated is expressed by the following:

$$(n_1 + n_2 - 2) = 1 \qquad .......... (6)$$

Accordingly, as is apparent from the equation (6), if the refractive indexes of the individual liquids 3, 3' are selected so as to appropriately satisfy the condition $(n_1 + n_2) = 3$, the collimation error due to the inclination of the instrument body 1 may be compensated. For example, if the liquids 3, 3' are identical, their appropriate refractive index is $n_1 = n_2 = 1.5$.

For this reason, silicone oil having a refractive index of 1.5 is suitable for the liquid.

In principle, the relation similar to the equation (6) may be basically satisfied even if either a single container or more than two containers are used. However, because a liquid having a refractive index of 2 does not exist, it is impossible to compensate the error with a single container. Further, many containers cause a loss of light. Therefore it is preferable to use two containers.

Therefore, the general formula of the condition (6) may be approximately expressed by the following:

$$(n_1 + n_2 ... + n_x - x) \qquad ..... (7)$$

where x is the number of the containers.

Although in FIG. 4 the compensation principle of the present invention in the case that the instrument body 1 is inclined in only one direction is illustrated, this principle should of course be applicable where the instrument body 1 is inclined in a direction perpendicular to the one direction; that is, it is possible to compensate a collimation error due to a two-directional inclination of the instrument body 1 in two directions, i.e., back-and-forth direction and left-to-right direction.

In this specification, the terms "vertical", "horizontal" and "parallel" mean not only "exactly vertical", "exactly horizontal" and "exactly parallel", respectively, but also "substantially vertical", "substantially horizontal" and "substantially parallel", respectively, with a tolerance limit of ±1 degree of angle. Such amount of error has no influence on the compensation principle of the present invention.

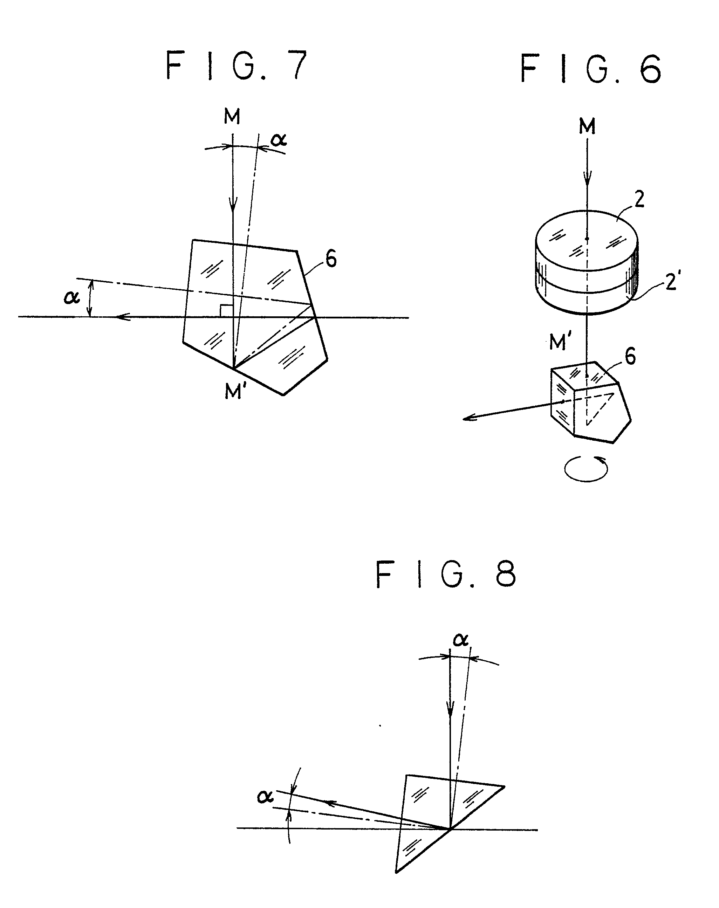

FIG. 5 shows an automatic horizontal point setters (two-directional level) in which a light beam emitted vertically from the light source 4 mounted at the upper portion the instrument body 1 is reflected horizontally, and the point on which the light beam is irradiated is determined as a horizontal point. As shown in FIG. 6, the light beam is emitted vertically downwardly from the container 2' after the inclination error has been compensated as the light passes through the two containers 2, 2', and is then reflected by a double-face reflector 6, such as a penta-prism rotatably mounted at the lower portion of the instrunent body 1, so as to be hence emitted horizontally through a cylindrical projector window 7.

The double-face reflector 6 is secured to a rotor 8 attached to the lower portion of the instrument body 1 and rotatable about the vertical axis. As the motor 9 is rotated, its rotation is transmitted to the rotor 8 via a first pulley 10 mounted on the drive shaft of the motor 9, an endless belt 11 and a second pulley 12 formed on the upper portion of the rotor 8.

The double-face reflector 6, as shown in FIG. 7, has the function of reflecting the incident light perpendicularly thereto irrespective of the incident angle. Accordingly, even when it is inclined together with the instrument body 1, the double-face reflector 6 reflects the incident light exactly perpendicularly which light has been compensated to the vertical as it passes through the containers 2, 2'. As a result, the vertical incident light is emitted from the double-face reflector 6.

Consequently, in the automatic horizontal point setter, it is impossible that the double-face reflector 6 be replaced with a single-face reflector of FIG. 8 which has no function of reflecting the incident light always perpendicularly.

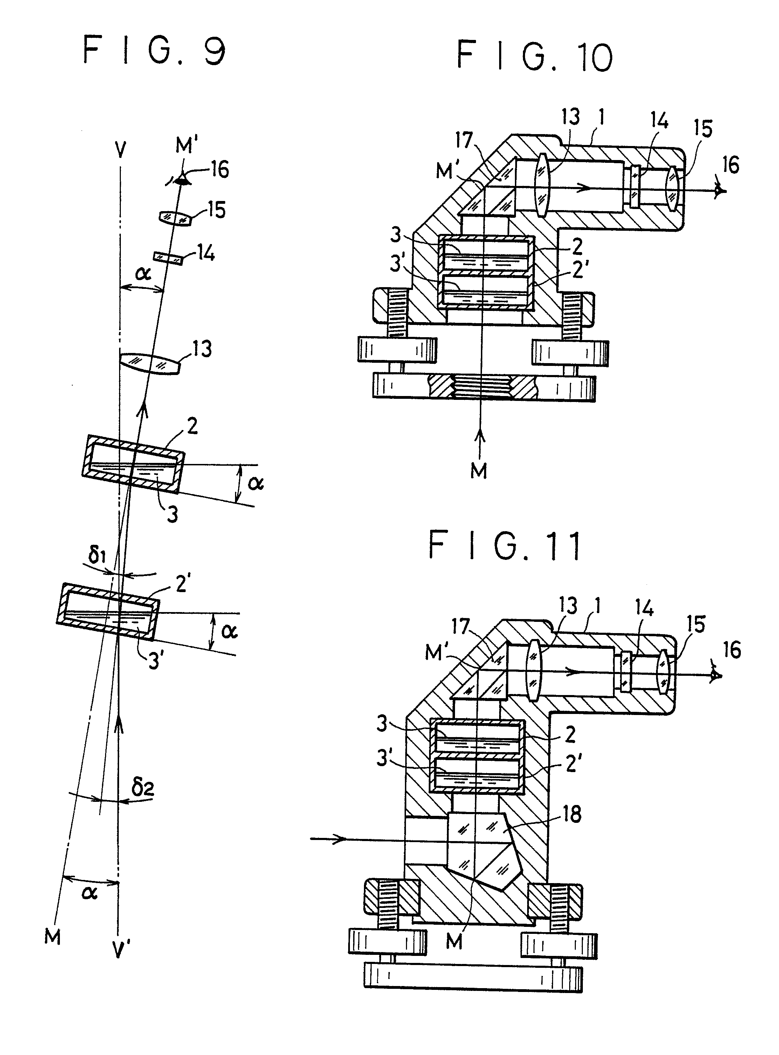

FIG. 9 illustrates the compensation principle of the present invetion applied to an automatic vertical point collimator or an automatic horizontal point collimator, in which the image of the vertical or horizontal point is projected upon a focus plate 14 via the containers 2, 2' and an objective 13 and is then visually collimated via an eyepiece lens 15 by eyes 16. The optical system of FIG. 9 is similar to the optical system of FIG. 4 except that the light beam passes through the containers 2, 2' upwardly, i.e., in the reverse direction. The optical system of FIG. 9 is identical in compensation principle with that of FIG. 4.

FIG. 10 illustrates an embodiment of an automatic vertical point collimator employed such as a centripetal telescope of a surveying instrument, in which the lower vertical point is collimated by a side ocular provided at the side portion of the instrument body 1 according to the compensation principle of FIG. 9. The vertical light beam incident from the lower vertical point is compensated so as to be along the vertical collimation axis M-M' as it passes through the containers 2, 2', and thereafter the light beam is reflected horizontally by a right-angled prism 17.

In this case, when the image of the vertical point is to be observed by the ocular as a regular image with respect to right and left directions, it is necessary to replace the right-angled prism 17 with a dach-prism, which has a function of inverting the image with respect to right and left directions.

FIG. 11 illustrates an embodiment of an automatic horizontal point collimator such as autolevels, in which the horizontal point is collimated by the side ocular according to the compensation principle of FIG. 9. The horizontal incident light beam is reflected upwardly vertically by a double-face reflector 18 such as a penta-prism and is then collimated so as to be along the vertical collimation axis M-M' as it passes through the containers 2, 2', and thereafter the light beam is reflected horizontally by the right-angled prism 17.

Also in this case, when the image of the vertical point is to be observed by the ocular as an regular image with respect to right and left directions, it is necessary to replace the right-angled prism 17 with a dach-prism, which has a function of inverting the image with respect to right and left directions. Further, like in the case of FIG. 5, it is impossible that the double-face reflector 18 be replaced with a single-face reflector.

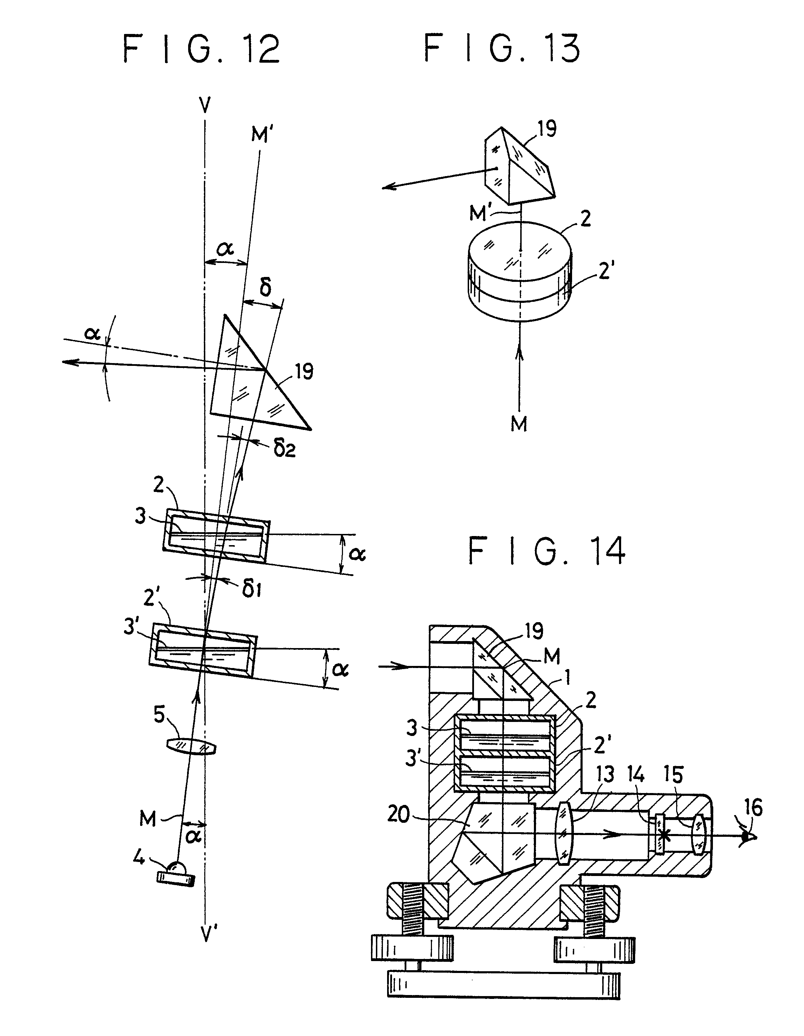

FIG. 12 illustrates the compensation principle applied to an automatic horizontal point setter, in which the light beam is emitted upwardly vertically from the light source 4 via the projector lens 5, then passes through the containers 2, 2' and is thereafter reflected horizontally by a single-face reflector 19 such as a right-angled prism or a dach-prism.

In the compensation principle, when the vertical collimation axis M-M' of the instrument body 1 is inclined by an angle $\alpha$ with respect to the imaginary vertical axis V-V', the light beam emitted upwardly from the light source 4 is refracted away from the imaginary vertical axis V-V' by the wedge-shaped liquids 3, 3' of thickness gradient $\alpha$ as it passes through the containers 2, 2; that is, a deviation angle $\delta$ is created by the containers 2, 2' in the direction opposite to the direction of compensation with respect to the vertical collimation axis M-M'.

However, since the single-face reflector 19 together with the instrument body 1 is inclined by an angle $\alpha$ in the same direction, the light beam incident on the single-face reflector 19 with the deviation angle $\delta$ is reflected horizontally therefrom, thus compensating an error due to the inclination of the instrument body 1.

FIG. 14 illustrates an automatic horizontal point collimator in which the horizontal light beam incident on the single-face reflector 19 is reflected thereby downwardly, and is compensated so as to be along the vertical collimation axis M-M' as it passes through the containers 2, 2' in the opposite direction, unlike the case of FIG. 12. Thereafter the light beam is reflected perpendicularly by a pentaprism 20, and the image of the horizontal point is projected upon the focus plate 14 by the objective 13 and is visually collimated by the eyes 16 via the eyepiece lens 15. The same compensation as the optical system of FIG. 12, except the direction of light beam, may take place.

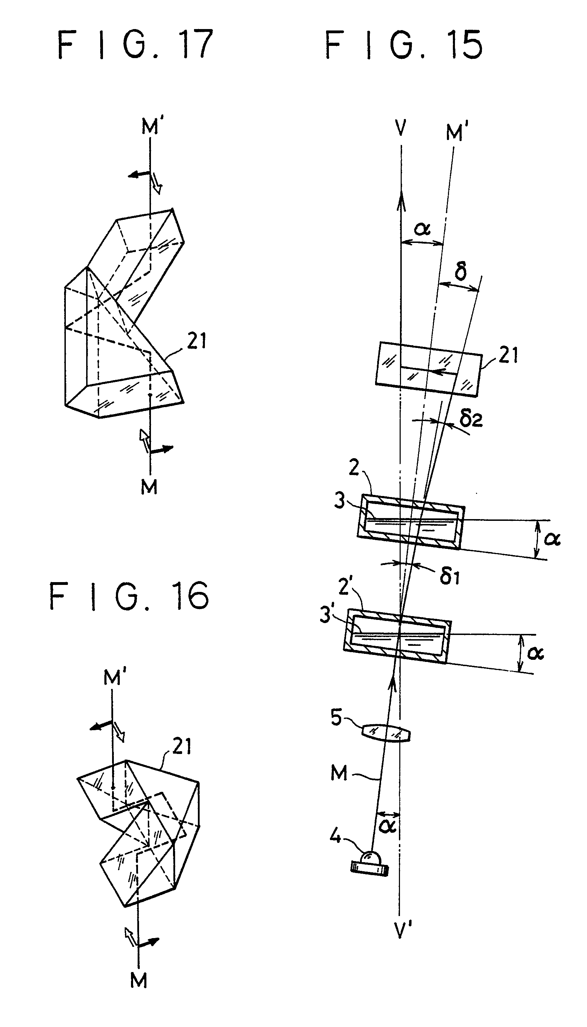

FIG. 15 illustrates the compensation principle applied to an automatic vertical point setter in which the light beam from the light source 4 is emitted upwardly vertically via the projector lens 5 and passes through the containers 2, 2'.

In this compensation principle, when the vertical collimation axis M-M' of the instrument body 1 is inclined by an angle $\alpha$ with respect to the imaginary vertical axis V-V', a deviation angle $\delta$ is created by the containers 2, 2' in the direction opposite to the compensating direction with respect to the vertical collimation axis M-M', like in the case of FIG. 12. A known inverter reflector 21 having a function of inverting the image as shown in FIGS. 16 and 17 is located above the container 2, so that the light beam is shifted by the inverter reflector 21 so as to be emitted along the imaginary vertical axis V-V'. Thus the error due to the inclination of the instrument body 1 has been compensated.

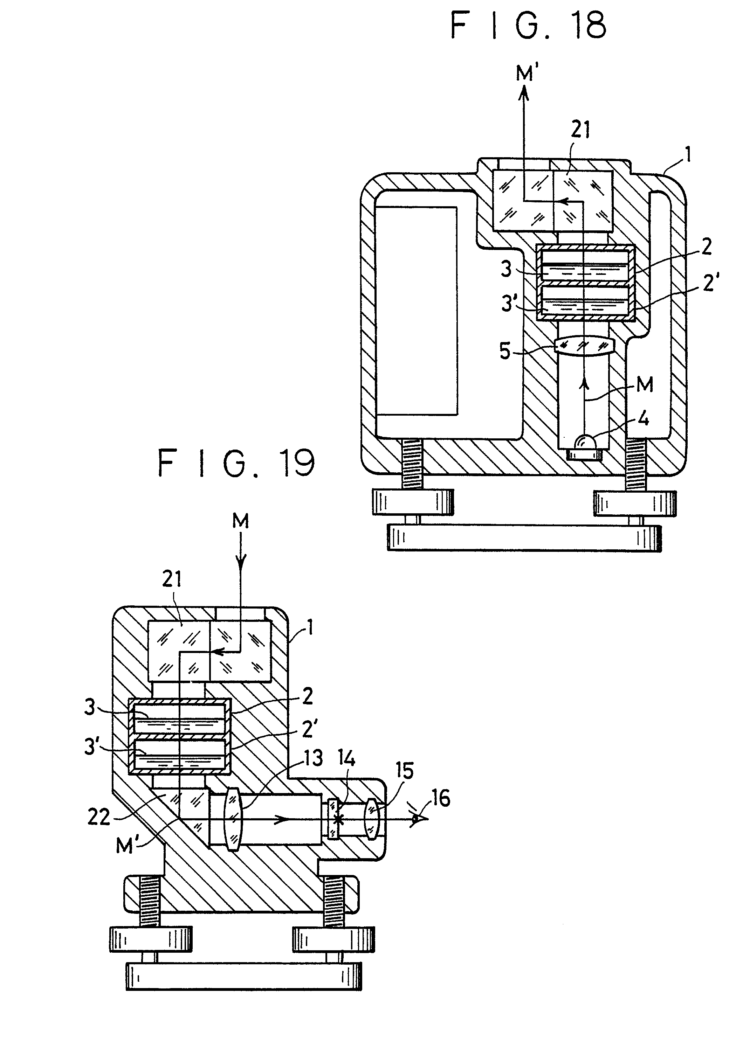

FIG. 18 illustrates an automatic vertical point setter using the compensation principle of FIG. 15.

FIG. 19 illustrates an automatic vertical point collimator in which the image of the vertical point is projected upon the focus plate 14 via the inverter reflector 21, the container 2, the container 2', the single-face reflector 22 and the objective 13 along the reverse direction, unlike the optical system of FIG. 15, and then the image is visually collimated by the eyes 16 via the eyepiece lens 15. Except the direction in which the light beam passes through the containers 2, 2', the compensation principle of FIG. 19 is identical with that of FIG. 15.

## Claims

1. An automatic compensator for compensating a collimation error due to an inclination of an instrument body in a surveying instrument, comprising:
- a plurality of transparent containers (2) fixed to the instrument body (1) horizontally with respect to a vertical collimation axis (M-M') of an optical system in the instrument, each of said containers having an upper and a lower surface parallel to each other; and
- a transparent liquid (3) charged in each of said containers so as to retain a hollow space at an upper portion thereof, said transparent liquid (3) being such that the difference between the sum of all refractive indices of said respective containers (2) charged with said transparent liquid and the number of said containers (2) equals approximately 1.

2. The automatic compensator for compensating a collimation error due to an inclination of an instrument body in a surveying instrument according to claim 1, wherein said transparent liquid (3) is high in transparency and has an appropriate refractive index and viscosity and is hardly changeable in quality even when in use for many years.

3. The automatic compensator for compensating a collimation error due to an inclination of an instrument body in a surveying instrument according to claim 1, wherein said transparent liquid (3) is silicone oil.

EPAB-36185.3

# F I G. 1

# F I G. 2

# FIG. 4

# FIG. 5

# FIG. 3

# FIG. 7

# FIG. 6

# FIG. 8

EPAB-36185.3

# F I G. 9

# F I G. 10

# F I G. 11

EPAB-36185.3

# FIG. 12

# FIG. 13

# FIG. 14

EPAB-36185.3

F I G. 17

F I G. 15

F I G. 16

EPAB-36185.3

F I G. 18

F I G. 19